# EUROPEAN PATENT SPECIFICATION

(11) **EP 2 557 215 B1**
(45) Date of publication and mention of the grant of the patent: **16.11.2016**
(21) Application number: 12178850.9
(22) Date of filing: 01.08.2012
(51) Int. Cl.: D06F 37/26, D06F 39/08

(54) **Washing machine**
Waschmaschine
Machine à laver

(30) Priority: 10.08.2011 KR 20110079490
(43) Date of publication of application: 13.02.2013
(73) Proprietor: Samsung Electronics Co., Ltd., Suwon-si, Gyeonggi-do, 443-742 (KR)
(72) Inventor: Kim, Hyun Mook, Gyeonggi-do (KR); Lee, Sang Hyeok, Gyeonggi-do (KR); Min, Je Hong, Gyeonggi-do (KR); Lee, Jung Hee, Gyeonggi-do (KR); Choi, Ji Hoon, Gyeonggi-do (KR); Jun, Kab Jin, Gyeonggi-do (KR)
(74) Representative: Grünecker Patent- und Rechtsanwälte PartG mbB

(56) References cited:
- EP-A1- 1 889 959
- DE-A1- 3 934 434
- DE-A1- 4 229 074
- FR-A- 1 181 176
- US-A1- 2007 028 654

## Description

### 1. Field

Embodiments relate to a washing machine to directly supply water to a rotary tub so as to perform washing using a small amount of water.

### 2. Description of the Related Art

In general, a washing machine includes a main body defining an external appearance thereof, a water tank arranged within the main body, and a rotary tub rotatably mounted within the water tank. The rotary tub is provided with communicating holes to enable water in the water tank to be introduced.

Such a washing machine is utilized to perform washing within the rotary tub by supplying wash water to the water tank and introducing the wash water supplied to the water tank into the rotary tub through communicating holes provided in the rotary tub.

In the washing machine having such a structure, a washing operation is performed within the rotary tub, although an amount of water corresponding to the relatively larger water tank than that of the rotary tub is required. Thus, a considerable amount of water should be inserted into the water tank, compared with water actually used in the rotary tub, thereby also increasing an input amount of washing agent so as to correspond to an amount of water which is inserted into the water tank.

Accordingly, there is recently a washing machine capable of performing washing using a small amount of water by directly supplying water into the rotary tub which is not provided with the communicating holes.

FR 118 11 76 A discloses a washing machine with a rotary tub. The diameter of this rotary tub increases from a first end with an opening, which may be closed by a door, to an opposite end, where the rotary tub is rotatably supported. At least two dehydration holes are arranged at the second end of the rotary tub. A valve, which is spring-biased in the closing direction of the corresponding dehydration hole is assigned to same. The valve forms a kind of switching unit, which will open or close the corresponding hole.

It is an object of one or more embodiments to provide a dehydration structure of a washing machine capable of performing washing using a small amount of water by virtue of directly supplying water into a rotary tub without a configuration corresponding to a water tank and to simplify the guidance of drainage water discharged by the tub.

This object is solved by the features of claim 1.

Advantageous embodiments are disclosed by the subclaims.

The dehydration hole switching unit may be selectively opened and closed depending on a rate of rotation of the rotary tub.

The at least one dehydration hole may include a plurality of dehydration holes disposed at the rotary tub, to be spaced apart from one another in a circumferential direction, and the dehydration hole switching unit may include a plurality of dehydration valves movably installed to open and close the plural dehydration holes depending on movement thereof, respectively, and dehydration valve elastic members to elastically support the dehydration valves.

The dehydration hole switching unit may further include a plurality of switching guides formed in an arc shape, each of which connecting two or more of the plural dehydration valves, and movement guides installed so as to allow opposite ends of each switching guide to be movable in a radial direction, and the dehydration valve elastic members may be respectively disposed at the movement guides, to elastically support the dehydration valves through each switching guide.

The rotary tub may include a drainage hole for drainage, and the rotary tub may further include a drainage hole switching unit disposed at the drainage hole, to open and close the drainage hole.

The drainage hole switching unit may include a drainage valve movably installed to open and close the drainage hole depending on a position thereof, and a drainage valve drive unit to move the drainage valve.

The drainage valve drive unit may include a solenoid, and the drainage valve may include a valve portion to open and close the drainage hole, a plunger portion made of a magnetic substance, and a guide portion to connect the valve portion to the plunger portion and to guide movement of the drainage valve.

The washing machine may further include a rotational shaft mounted, at one end thereof, to a central portion of a rear surface of the rotary tub, a bearing housing provided with a shaft mounting hole through which the rotational shaft is mounted, and bearings mounted at the shaft mounting hole so as to rotatably support the rotational shaft, the bearing housing may include a first feed passage to guide water used for washing, and the rotary tub may include a feed guide portion extending rearward from a periphery of the rotational shaft while being provided therein with a second feed passage connected to the first feed passage so as to guide water supplied from the first feed passage into the rotary tub.

The washing machine may further include a gutter disposed at an outer side of the rotary tub so as to guide drainage of water discharged from the rotary tub.

### BRIEF DESCRIPTION OF THE DRAWINGS

These and/or other aspects of one or more embodiments will become apparent and more readily appreciated from the following description of embodiments, taken in conjunction with the accompanying drawings of which:
FIG. 1 is a sectional view illustrating a washing machine according to an embodiment;
FIG. 2 is an exploded perspective view illustrating a dehydration hole switching unit applied to a rotary tub of the washing machine according to an embodiment;
FIG. 3 is a sectional view illustrating a feed path and the dehydration hole switching unit applied to the rotary tub of the washing machine according to an embodiment; and
FIG. 4 is a sectional view illustrating a drainage hole switching unit applied to the rotary tub of the washing machine according to an embodiment.

### DETAILED DESCRIPTION

Reference will now be made in detail to the embodiments of the present invention, examples of which are illustrated in the accompanying drawings, wherein like reference numerals refer to like elements throughout.

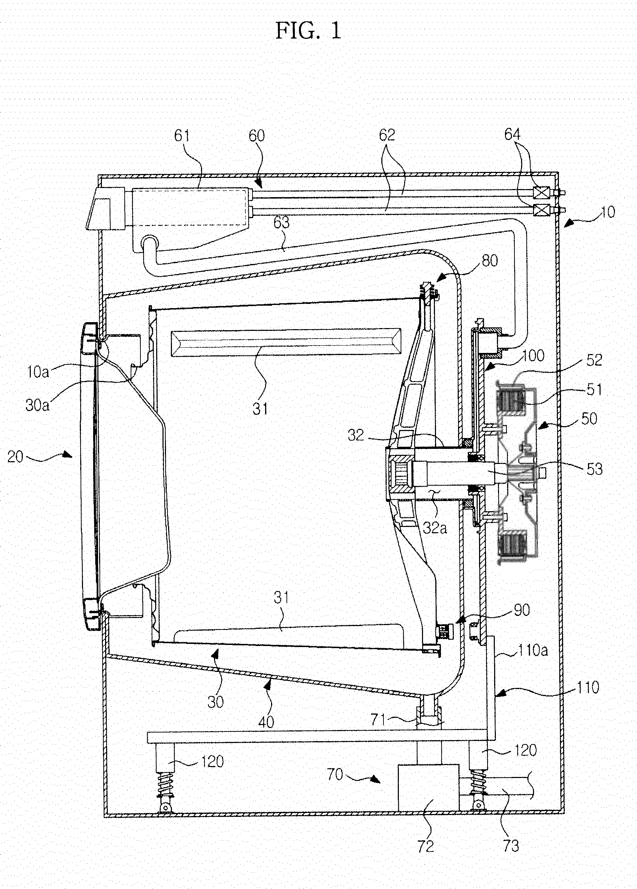

As shown in FIG. 1, a washing machine according to an embodiment includes a main body 10 to define an external appearance of the washing machine while being provided, at a front surface thereof, with an input hole 10a, a door 20 rotatably mounted at one side of the main body 10 to open and close the input hole 10a, a rotary tub 30 into which laundry is inserted while being rotatably mounted within the main body 10 so as to perform washing of the laundry in the rotary tub 30 during rotation thereof, a gutter 40 disposed at an outer side of the rotary tub 30 so as to guide drainage of water discharged from the rotary tub 30, a drive unit 50 to rotate the rotary tub 30, a feed unit 60 to supply water to the rotary tub 30, and a drainage unit 70 to discharge the water outward of the washing machine from the rotary tub 30 during drainage and dehydration.

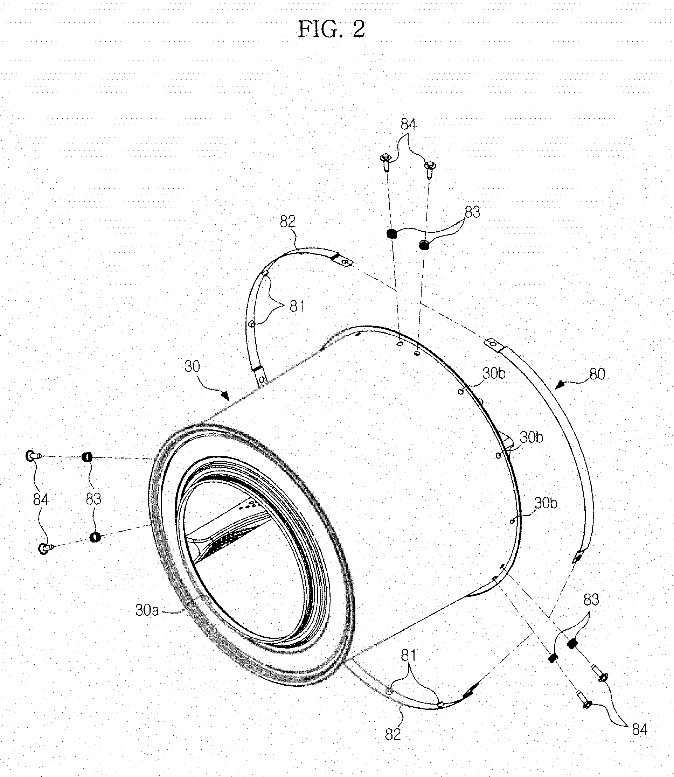

The rotary tub 30 is provided, at a front surface thereof, with a through hole 30a so that laundry may be inserted into the rotary tub 30, and is mounted, at a central portion of a rear surface thereof, with one end of a rotational shaft 53 to be described later. Also, the rotary tub 30 includes a plurality of lifters 31 arranged at an inner peripheral surface thereof to be spaced apart from one another in a circumferential direction so as to lift up laundry, and is formed to have a diameter progressively increasing from a first end side of the rotary tub 30 to a second end side thereof located opposite the first end side. That is, the rotary tub 30 in an embodiment is formed to have a diameter progressively increasing from a front end side thereof to a rear end side thereof. In addition, the rotary tub 30 is provided, at the second end side thereof, namely, an outer peripheral surface of the rear end side thereof, with a plurality of dehydration holes 30b (see FIG. 2) to discharge water during dehydration. The plurality of dehydration holes 30b is arranged at the outer peripheral surface of the second end side of the rotary tub 30 to be spaced apart from one another in the circumferential direction, in order to smoothly discharge the water.

The gutter 40 has a round shape, for example, a barrel shape, opened at a front surface thereof, and is disposed at an outer side of the rotary tub 30 while being connected, at a lower surface thereof, with a first drainage pipe 71 to be described later. The lower surface of the gutter 40 is formed to be inclined downward toward a portion to which the first drainage pipe 71 is connected so as to guide water discharged from the rotary tub 30 during washing or dehydration to the first drainage pipe 71, thereby discharging the water.

The drive unit 50 includes a stator 51 having a coil, a rotor 52 rotating while interacting with the stator 51, and a rotational shaft 53 fixed, at one end thereof, to the rear surface of the rotary tub 30 while being connected, at the other end thereof, to the rotor 52 so as to rotate with the rotor 52.

The feed unit 60 includes a washing agent feed unit 61 to supply washing agents, first feed pipes 62 to guide water from an external feed source to the washing agent feed unit 61, feed valves 64 to allow the water to be selectively transferred to the first feed pipes 62, and a second feed pipe 63 to guide the water from the washing agent feed unit 61 to a bearing housing 100 to be described later.

The drainage unit 70 includes the first drainage pipe 71 connected to the lower surface of the gutter 40, a drainage pump 72 to discharge water by pumping, and a second drainage pipe 73 to guide the water discharged from the drainage pump 72 to the outside.

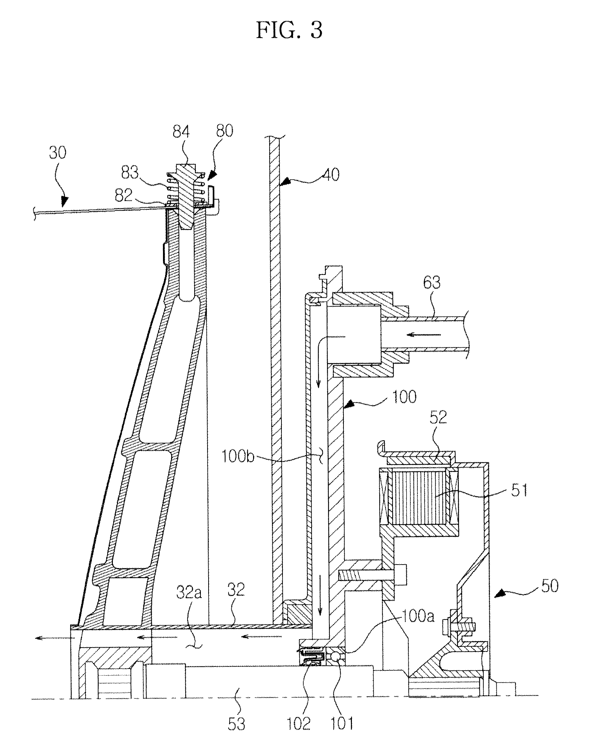

As shown in FIG. 3, the washing machine includes the bearing housing 100 mounted therein with bearings 101 to rotatably support the rotational shaft 53. The bearing housing 100 is connected to the second feed pipe 63 so as to enable guidance of water supplied to the rotary tub 30. The bearing housing 100 includes a shaft mounting hole 100a through which the rotational shaft 53 is mounted, a first feed passage 100b to guide the water supplied to the rotary tub 30, a sealing member 102 mounted at the shaft mounting hole 100a, to prevent leakage of water through a gap between the rotational shaft 53 and the shaft mounting hole 100a, and the bearings 101.

Meanwhile, the central portion of the rear surface of the rotary tub 30 is provided with a feed guide portion 32 protruding rearward, and the feed guide portion 32 is provided therein with a second feed passage 32a to be connected with the first feed passage 100b and to guide water in the rotary tub 30.

Accordingly, water supplied from the external feed source passes through the first feed pipes 62, the water agent feed unit 61, the second feed pipe 63, the first feed passage 100b of the bearing housing 100, and the second feed passage 32a provided at the feed guide portion 32 of the rotary tub 30 in sequence, thereby supplying the water to the rotary tub 30.

Referring again to FIG. 1, a support bracket 110 is disposed beneath the gutter 40 so as to mount the bearing housing 100 and attenuate vibration generated from the rotary tub 30. The support bracket 110 is disposed to be spaced apart from a bottom surface of the main body 10 thorough a plurality of buffer units 120 coupled, at upper ends thereof, to the support bracket 110 while being supported, at lower ends thereof, by the bottom surface of the main body 10. The support bracket 110 is provided, at a rear end thereof, with a fixing portion 110a extending upwards to fix the bearing housing 100.

Also, the washing machine includes a dehydration hole switching unit 80 to open and close the dehydration holes 30b so that the dehydration holes 30b may be selectively opened only during dehydration. In an embodiment, the dehydration hole switching unit 80 selectively opens and closes the dehydration holes 30b depending on a rate of rotation of the rotary tub 30.

As shown in FIGS. 2 and 3, the dehydration hole switching unit 80 includes a plurality of dehydration valves 81 movably installed to open and close the plural dehydration holes 30b depending on positions thereof, respectively, switching guides 82 formed in an arc shape, each of which connecting two or more of the plural dehydration valves 81, movement guides 84 installed to allow opposite ends of each switching guide 82 to be movable so as to guide movement of the switching guide 82 in a radial direction, and dehydration valve elastic members 83 respectively installed at the movement guides 84 so as to elastically support the associated switching guide 81 toward the outer peripheral surface of the rotary tub 30, thereby indirectly and elastically supporting the associated dehydration valves 81 through the elastically supported switching guide 81.

The rotary tub 30 rotates at a high rate of rotation during dehydration, compared with during washing. As such, when the rate of rotation of the rotary tub 30 is increased for dehydration, centrifugal force acting on water in the rotary tub 30 is increased. As the centrifugal force increases, water progressively moves along the inner peripheral surface of the rotary tub 30 toward the second end side, namely, the rear end side of the rotary tub 30, which is formed to have a relatively large diameter.

As the centrifugal force also increases, each switching guide 82 moves along the associated movement guides 84 in the outward radial direction while the dehydration valve elastic members 83 supporting the switching guide 82 are elastically deformed, and thus the associated dehydration valves 81 are spaced apart from the dehydration holes 30b, respectively, to open the dehydration holes 30b. Consequently, water in the rotary tub 30, moving to the rear end side thereof, is discharged through the dehydration holes 30b, and the water discharged through the dehydration holes 30b is guided to the first drainage pipe 71 by the gutter 40, thereby passing through the first drainage pipe 71, the drainage pump 72, and the second drainage pipe 73 in sequence. As a result, the water is discharged outward of the washing machine.

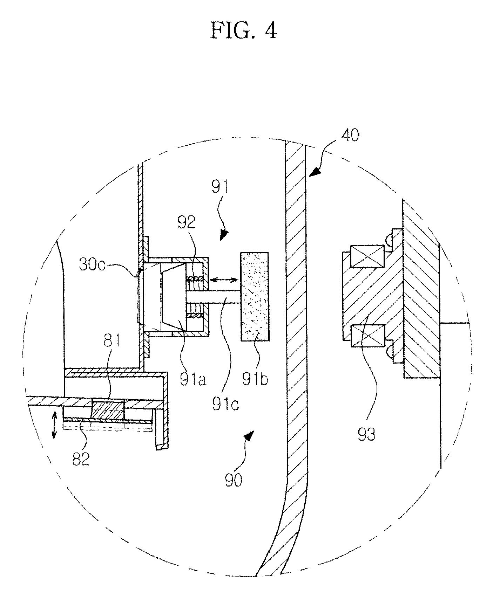

As shown in FIG. 4, the rear surface of the rotary tub 30 is provided with a drainage hole 30c to allow water to be discharged from the rotary tub 30 during drainage, and the drainage hole 30c is provided with a drainage hole switching unit 90 to open and close the drainage hole 30c so that the drainage hole 30c may be selectively opened only during drainage.

The drainage hole switching unit 90 includes a drainage valve 91 movably installed to open and close the drainage hole 30c depending on a position thereof, and a drainage valve drive unit 93 to move the drainage valve 91. In an embodiment, the drainage valve drive unit 93 includes a solenoid to generate a magnetic field by application of power, and the drainage valve 91 includes a valve portion 91a to open and close the drainage hole 30c, a plunger portion 91b made of a magnetic substance, and a guide portion 91c to connect the valve portion 91a to the plunger portion 91 b and to guide movement of the drainage valve 91. Furthermore, the drainage hole switching unit 90 includes a drainage valve elastic member 92 to elastically support the drainage valve 91, thereby allowing the drainage hole 30c to be maintained in a state of being closed by the elastically supported drainage valve 91.

Thus, the drainage valve 91 is elastically supported by the drainage valve elastic member 92 so as to maintain the state of closing the drainage hole 30c, in a state in which a washing or dehydration operation is executed. In addition, when the rotary tub 30 rotates at a predetermined angle so that the drainage valve drive unit 93 is disposed at a position corresponding to the drainage valve 91 during drainage and then power is applied to the solenoid forming the drainage valve drive unit 93, the magnetic field is generated in the solenoid, and thus the drainage valve 91 moves toward the drainage valve drive unit 93 by magnetic force acting on the plunger portion 91 b. Consequently, the drainage hole 30c is opened to discharge water in the rotary tub 30 through the drainage hole 30c.

Although the dehydration valves 81 in an embodiment are indirectly and elastically supported by the dehydration valve elastic members 83 through the switching guides 82, an embodiment is not limited thereto. For example, dehydration valves may be elastically supported by dehydration valve elastic members, respectively.

Also, although the dehydration hole switching unit 80 in an embodiment opens and closes the dehydration holes 30b by increasing centrifugal force occurring due to increasing of the rate of rotation of the rotary tub 30, an embodiment is not limited thereto. For example, a dehydration hole switching unit includes a solenoid valve and the like, thereby enabling opening and closing of dehydration holes.

In addition, although the rotary tub 30 in the illustrated embodiment is formed to have a large diameter at the rear end side thereof, compared with at the front end side thereof, the present invention is not limited thereto. On the contrary, a rotary tub may be formed to have a large diameter at a front end side thereof, compared with at a rear end side thereof. In addition, the rotary tub may be formed to have a uniform diameter at a front end side thereof.

As is apparent from the above description, a rotary tub has a diameter progressively increasing from a first end side thereof to a second end side thereof, and the rotary tub is provided, at an outer peripheral surface of the second end side thereof, with dehydration holes. Therefore, when a rate of rotation of the rotary tub is increased for dehydration, water moves to the second end side of the rotary tub depending on increase of the rate of rotation thereof, thereby being discharged through the dehydration holes arranged at the second end side. As a result, dehydration is achieved.

Although a few embodiments have been shown and described, it would be appreciated by those skilled in the art that changes may be made in these embodiments without departing from the principles of the invention, the scope of which is defined in the claims and their equivalents.

## Claims

1. A washing machine comprising:
a main body (10) to define an external appearance of the washing machine;
a rotary tub (30) having a diameter progressively increasing from a first end side thereof to a second end side thereof located opposite the first end side;
a gutter (40) disposed at an outer side of the rotary tub (30) so as to guide drainage of water discharged from the rotary tub (30);
at least one dehydration hole (30b) arranged at the second end side of the rotary tub (30); and
a dehydration hole switching unit (80) to open and close the at least one dehydration hole (30b), **characterized in that** the main body (10) and the gutter (40) are made of one part and a front surface of the gutter (40) is connected to an inner surface of the main body (10), wherein the gutter encloses the rotary tub (30) with a lower surface (40) formed to be inclined downward toward the portion to which a first drainage pipe (71) is connected.

2. The washing machine according to claim 1, wherein the dehydration hole switching unit (80) is selectively opened and closed depending on a rate of rotation of the rotary tub (30).

3. The washing machine according to claim 2, wherein:
the at least one dehydration hole (30b) comprises a plurality of dehydration holes disposed at the rotary tub (30), to be spaced apart from one another in a circumferential direction; and
the dehydration hole switching unit (80) comprises a plurality of dehydration valves (81) movably installed to open and close the plural dehydration holes (30b) depending on movement thereof, respectively, and dehydration valve elastic members (83) to elastically support the dehydration valves (81).

4. The washing machine according to claim 3, wherein:
the dehydration hole switching unit (80) further comprises a plurality of switching guides (82) formed in an arc shape, each of which connecting two or more of the plural dehydration valves (81), and movement guides (84) installed so as to allow opposite ends of each switching guide (82) to be movable in a radial direction; and
the dehydration valve elastic members (83) are respectively disposed at the movement guides (84), to elastically support the dehydration valves through each switching guide.

5. The washing machine according to claim 1, wherein:
the rotary tub (30) comprises a drainage hole (30c) for drainage; and
the rotary tub further comprises a drainage hole switching unit (90) disposed at the drainage hole (30c), to open and close the drainage hole.

6. The washing machine according to claim 5, wherein the drainage hole switching unit (90) comprises a drainage valve (91) movably installed to open and close the drainage hole (30c) depending on a position thereof, and a drainage valve drive unit (93) to move the drainage valve (91).

7. The washing machine according to claim 6, wherein:
the drainage valve drive unit (93) comprises a solenoid; and
the drainage valve (91) comprises a valve portion (91 a) to open and close the drainage hole (30c), a plunger portion (91 b) made of a magnetic substance, and a guide portion (91 c) to connect the valve portion (91 a) to the plunger portion (91b) and to guide movement of the drainage valve.

8. The washing machine according to claim 1, further comprising:
a rotational shaft (53) mounted, at one end thereof, to a central portion of a rear surface of the rotary tub (30), a bearing housing (100) provided with a shaft mounting hole (100a) through which the rotational shaft (53) is mounted, and bearings (101) mounted at the shaft mounting hole (100a) so as to rotatably support the rotational shaft, wherein:
the bearing housing (100) comprises a first feed passage (100b) to guide water used for washing; and
the rotary tub (30) comprises a feed guide portion (32) extending rearward from a periphery of the rotational shaft (53) while being provided therein with a second feed passage (32a) connected to the first feed passage (100b) so as to guide water supplied from the first feed passage into the rotary tub (30).

## Patentansprüche

1. Eine Waschmaschine, welche aufweist:
einen Hauptkörper (10) zur Bestimmung eines äußeren Erscheinungsbildes der Waschmaschine;
eine Drehtrommel (30) mit einem progressiv anwachsenden Durchmesser von einer ersten Endseite zu einer zweiten Endseite der Trommel, die der ersten Endseite gegenüberliegt;
einem Abfluss (40) der auf einer Außenseite der Drehtrommel (30) angeordnet ist, um eine Drainage von aus der Drehtrommel (30) abgegebenen Wasser zu führen;
wenigstens einem Dehydrationsloch (30b), welches an der zweiten Endseite der Drehtrommel (30) angeordnet ist; und
einer Dehydrationslochschalteinheit (80) zum Öffnen und Schließen des wenigstens einen Dehydrationsloches (30b), **dadurch gekennzeichnet, dass** Hauptkörper (10) und Abfluss (40) aus einem Teil hergestellt sind und eine Vorderseite des Abflusses (40) mit einer Innenfläche des Hauptkörpers (10) verbunden ist, wobei der Abfluss die Drehtrommel (30) mit einer Unterseite (40) umgibt, die nach unten in Richtung des Bereichs geneigt ausgebildet ist, mit welchem eine erste Drainageleitung (71) verbunden ist.

2. Die Waschmaschine nach Anspruch 1, wobei die Dehydrationslochschalteinheit (80) selektiv öffnet und schließt in Abhängigkeit von einer Drehrate der Drehtrommel (30).

3. Die Waschmaschine nach Anspruch 2, wobei das wenigstens eine Dehydrationsloch (30b) eine Vielzahl von Dehydrationslöchern umfasst, die an der Drehtrommel (30) beabstandet voneinander in einer Umfangsrichtung angeordnet sind und die Dehydrationslochumschalteinheit (80) eine Vielzahl von Dehydrationsventilen (81) aufweist, die beweglich zum Öffnen und Schließen der Vielzahl von Dehydrationslöchern (30b) in Abhängigkeit von ihrer Bewegung entsprechend installiert sind sowie Dehydrationsventilelastikbauteile (83) zur elastischen Abstützung der Dehydrationsventile (81).

4. Die Waschmaschine nach Anspruch 3, wobei die Dehydrationslochschalteinheit (80) weiterhin eine Vielzahl von Schaltführungen (82) in Bogenform aufweist, von denen jede zwei oder mehr der Vielzahl von Dehydrationsventilen (81) verbindet und Bewegungsführungen (84) so installiert sind, dass gegenüberliegende Enden jeder Schaltführung (82) in Radialrichtung bewegbar sind, und die Dehydrationsventilelastikbauteile (83) entsprechend an den Bewegungsführungen (84) angeordnet sind, um die Dehydrationsventile durch jede Schaltführung elastisch abzustützen.

5. Die Waschmaschine nach Anspruch 1, wobei die Drehtrommel (30) eine Drainageöffnung (30c) zur Drainage aufweist und die Drehtrommel (30) weiterhin eine Drainageöffnungsschalteinheit (90) aufweist, die an der Drainageöffnung (30c) zum Öffnen und Schließen von dieser angeordnet ist.

6. Die Waschmaschine nach Anspruch 5, wobei die Drainageöffnungsschalteinheit (90) ein Drainageventil (91) aufweist, welches beweglich zum Öffnen und Schließen der Drainageöffnung (30c) in Abhängigkeit einer Positionierung von diesem installiert ist sowie eine Drainageventilantriebseinheit (93) zur Bewegung des Drainageventils (91).

7. Die Waschmaschine nach Anspruch 6, wobei die Drainageventilantriebseinheit (93) einen Elektromagneten aufweist und das Drainageventil (91) einen Ventilabschnitt (91a) zum Öffnen und Schließen der Drainageöffnung (30c), einen Stößelabschnitt (91 b) aus einer magnetischen Substanz, und einen Führungsabschnitt (91 c) zur Verbindung des Ventilabschnitts (91 a) mit dem Stößelabschnitt (91 b) und zur Führung der Bewegung des Drainageventils aufweist.

8. Die Waschmaschine nach Anspruch 1, welche weiterhin aufweist:
eine Drehwelle (53) die an einem ihrer Enden an einem Zentralbereich einer Rückseite der Drehtrommel (30) montiert ist, ein Lagergehäuse (100) mit einem Wellenmontageloch (100a), durch welches die Drehwelle (53) montiert ist, und mit Lagern (101) montiert an der Wellenmontageöffnung (100a) zur drehbaren Abstützung der Drehwelle, wobei das Lagergehäuse (100) eine erste Zufuhrpassage (100b) zur Führung von Wasser aufweist, welches zum Waschen verwendet wird, und
die Drehtrommel (30) einen Zufuhrführungsabschnitt (32) aufweist, der sich von einem Umfang der Drehwelle (53) nach hinten erstreckt, wobei darin eine zweite Zufuhrpassage (32a) in Verbindung mit der ersten Zufuhrpassage (100b) vorgesehen ist, um Wasser zugeführt von der ersten Zuführpassage in die Drehtrommel (30) zu führen.

## Revendications

1. Machine à laver comprenant :
un corps principal (10) pour définir une apparence externe de la machine à laver ;
une cuve rotative (30) présentant un diamètre qui augmente progressivement d'un premier côté d'extrémité correspondant à un deuxième côté d'extrémité correspondant, situé à l'opposé du premier côté d'extrémité ;
une gouttière (40) disposée sur un côté externe de la cuve rotative (30) de manière à guider le drainage de l'eau évacuée par la cuve rotative (30) ;
au moins un trou de déshydratation (30b) agencé sur le deuxième côté d'extrémité de la cuve rotative (30) ; et
une unité de commutation de trou de déshydratation (80) pour ouvrir et fermer ledit au moins un trou de déshydratation (30b), **caractérisée en ce que** le corps principal (10) et la gouttière (40) sont constitués comme une seule partie et qu'une surface avant de la gouttière (40) est connectée à une surface interne du corps principal (10), dans laquelle la gouttière entoure la cuve rotative (30) avec une surface inférieure (40) formée pour être inclinée vers le bas vers la portion à laquelle un premier tuyau de drainage (71) est connecté.

2. Machine à laver selon la revendication 1, dans laquelle l'unité de commutation du trou de déshydratation (80) est ouverte et fermée sélectivement en fonction d'une vitesse de rotation de la cuve rotative (30).

3. Machine à laver selon la revendication 2, dans laquelle :
ledit au moins un trou de déshydratation (30b) comprend une pluralité de trous de déshydratation disposés sur la cuve rotative (30), à espacer entre eux en direction circonférentielle ; et
l'unité de commutation de trou de déshydratation (80) comprend une pluralité de vannes de déshydratation (81) installées de manière mobile pour ouvrir et fermer la pluralité de trous de déshydratation (30b) en fonction de leur mouvement, respectivement, et des éléments élastiques de vanne de déshydratation (83) pour supporter les vannes de déshydratation (81) de manière élastique.

4. Machine à laver selon la revendication 3, dans laquelle :
l'unité de commutation de trou de déshydratation (80) comprend en outre une pluralité de guides de commutation (82) de forme arquée, connectant chacun deux ou plusieurs vannes de la pluralité de vannes de déshydratation (81), et des guides de mouvement (84) installés de manière à permettre à des extrémités opposées de chaque guide de commutation (82) d'être déplaçables en direction radiale ; et
les éléments élastiques de vanne de déshydratation (83) sont disposés respectivement sur les guides de mouvement (84), pour supporter les vannes de déshydratation de manière élastique à travers chaque guide de commutation.

5. Machine à laver selon la revendication 1, dans laquelle :
la cuve rotative (30) comprend un trou de drainage (30c) pour le drainage ; et
la cuve rotative comprend en outre une unité de commutation de trou de drainage (90) disposée sur le trou de drainage (30c), pour ouvrir et fermer le trou de drainage.

6. Machine à laver selon la revendication 5, dans laquelle l'unité de commutation de trou de drainage (90) comprend une vanne de drainage (91) installée de manière mobile pour ouvrir et fermer le trou de drainage (30c) en fonction d'une position correspondante, et une unité d'entraînement de vanne de drainage (93) pour déplacer la vanne de drainage (91).

7. Machine à laver selon la revendication 6, dans laquelle :
l'unité d'entraînement de vanne de drainage (93) comprend un solénoïde ; et
la vanne de drainage (91) comprend une portion de vanne (91a) pour ouvrir et fermer le trou de drainage (30c), une portion de piston (91b) constituée d'une substance magnétique, et une portion de guidage (91c) pour connecter la portion de vanne (91a) à la portion de piston (91b) et pour guider le mouvement de la vanne de drainage.

8. Machine à laver selon la revendication 1, comprenant en outre :
un axe de rotation (53) monté, à l'une de ses extrémités, sur une portion centrale d'une surface arrière de la cuve rotative (30), un boîtier de palier (100) pourvu d'un trou de montage d'axe (100a) à travers lequel est monté l'axe de rotation (53), et des paliers (101) montés sur le trou de montage d'axe (100a) pour supporter l'axe de rotation de manière rotative, dans laquelle :
le boîtier de palier (100) comprend un premier passage d'alimentation (100b) pour guider l'eau utilisée pour le lavage ; et
la cuve rotative (30) comprend une portion de guidage d'alimentation (32) qui s'étend vers l'arrière depuis une périphérie de l'axe de rotation (53) tout en étant pourvue à l'intérieur de celle-ci d'un deuxième passage d'alimentation (32a) connecté au premier passage d'alimentation (100b) de manière à guider de l'eau alimentée à travers le premier passage d'alimentation dans la cuve rotative (30).
